(19) Europäisches Patentamt
European Patent Office
Office européen des brevets

(11) **EP 0 691 201 B1**

(12) **EUROPÄISCHE PATENTSCHRIFT**

(45) Veröffentlichungstag und Bekanntmachung des Hinweises auf die Patenterteilung:
**13.10.2004 Patentblatt 2004/42**

(51) Int Cl.[7]: **B32B 27/08**, B32B 27/40, C08G 63/193, C08G 63/64, C08L 81/06, C08L 69/00, C09D 167/03, C09D 169/00

(21) Anmeldenummer: **95109936.5**

(22) Anmeldetag: **26.06.1995**

(54) **Hinterspritzte Laminate mit Farbschicht**

Spray-coated laminats with colour layer

Stratifiés revêtus par projection comprenant une couche de couleur

(84) Benannte Vertragsstaaten:
**BE DE ES FR GB IT NL SE**

(30) Priorität: **08.07.1994 DE 4424106**

(43) Veröffentlichungstag der Anmeldung:
**10.01.1996 Patentblatt 1996/02**

(73) Patentinhaber: **Bayer MaterialScience AG**
**51368 Leverkusen (DE)**

(72) Erfinder:
- **Wank, Joachim**
  **D-41541 Dormagen (DE)**
- **Bier, Peter, Dr.**
  **D-47800 Krefeld (DE)**
- **Post, Bernd**
  **D-47441 Moers (DE)**

(56) Entgegenhaltungen:
**EP-A- 0 384 252**
**DE-A- 3 528 812**
**DE-B- 3 010 143**
**DE-C- 3 840 542**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 691 201 B1

Printed by Jouve, 75001 PARIS (FR)

## Beschreibung

Gegenstand der vorliegenden Erfindung sind Schichtstoffe einer Dicke bis 20 mm bestehend aus

1. einer 0,02 mm bis 0,8 mm dicken Folie aus thermoplastischem Kunststoff,

2. einer Farbschicht mit einer Dicke von 3 bis 50 µm, deren Erweichungstemperatur über der der thermoplastischen Kunststoff-Folie (1) liegt,

3. einer bei Raumtemperatur klebfreien Polyurethanschicht und

4. einer thermoplastischen Kunststoffschicht einer Dicke von 0,1 mm bis 19 mm, aus einer oder mehreren Kunststoffschichten bestehend, wobei Schicht 3 gegebenenfalls auch entfallen kann.

Erfindungsgemäß geeignete Folien aus thermoplastischen Kunststoffen (1) sind z.B. solche aus bekannten thermoplastischen aromatischen Polycarbonaten mit Gewichtsmittelmolekulargewichten w von 25.000 bis 200.000, vorzugsweise von 30.000 bis 120.000 und insbesondere von 30.000 bis 80.000 (w ermittelt über $\eta_{rel}$ in $CH_2Cl_2$ bei 20°C und einer Konzentration von 0,5 g pro 100 ml) und solche aus bekannten, thermoplastischen Polyarylsulfonen, welche linear (siehe DE-OS 27 35 144) oder verzweigt (siehe DE-OS 27 35 092 bzw. DE-OS 23 05 413) sein können.
Geeignete lineare Polyarylsulfone sind alle bekannten aromatischen Polysulfone oder Polyethersulfone mit w (Gewichtsmittelmolekulargewicht gemessen beispielsweise mittels Lichtstreuung) zwischen etwa 15 000 und etwa 55 000, vorzugsweise zwischen etwa 20 000 und etwa 40 000. Derartige Polyarylsulfone sind beispielsweise in DE-OS 17 19 244 bzw. US-PS 33 65 517 beschrieben.
Geeignete verzweigte Polyarylsulfone sind insbesondere die verzweigten Polyarylethersulfone gemäß DE-OS 23 05 413 bzw. US-PS 39 60 815, deren Mw (Gewichtsmittelmolekulargewicht, gemessen beispielsweise mittels Lichtstreuung) zwischen etwa 15 000 und etwa 50 000, vorzugsweise zwischen etwa 20 000 und 40 000 liegen. (Weitere Einzelheiten dazu siehe DE-AS 30 10 143).
Ebenfalls geeignet sind Folien aus thermoplastischen Celluloseestern, thermoplastischen Polyvinylchloriden und thermoplastischen Styrol-Acylnitril-Copolymerisaten.
Geeignete Celluloseester werden nach üblichen Verfahren durch Veresterung der Cellulose mit aliphatischen Monocarbonsäureanhydriden, vorzugsweise Essigsäureund Buttersäure- oder Essigsäure- und Propionsäureanhydrid, gewonnen. Die in der Rohlösung durchzuführende Hydrolyse wird durch einen geringen Wasserüberschuß so gesteuert, daß ein geringer Hydroxylgehalt (4 bis 25) erhalten wird. Die oxydative Bleiche des aus der Lösung isolierten Celluloseesters muß so durchgeführt werden, daß im Endprodukt kein Oxydationsmittel mehr nachweisbar ist; gegebenenfalls muß eine Nachbehandlung mit Reduktionsmitteln erfolgen. Zur Bestimmung der OH-Zahl werden die freien Hydroxylgruppen des Celluloseesters mit Acetanhydrid in Pyridin verestert, der Überschuß Anhydrid mit Wasser umgesetzt und zurücktitriert [Vorschrift: C.J. Mahn, L.B. Genung und R.F. Williams, Analysis of Cellulose Derivatives, Industrial and Engineering Chemistry, Vol. 14, Nr. 12, 935-940 (1942)].
Die Viskosität der Celluloseester soll 0,3 bis 0,5 Poise, gemessen als 20 gew.-%ige Lösung in Aceton, betragen. Vorzugsweise zu verwendende Celluloseester weisen im Falle der Acetobutyrate einen Essigsäuregehalt von 17 bis 23 Gew.-% und einen Buttersäuregehalt von 45 bis 50 Gew.-%, im Falle der Acetopropionate einen Propionsäuregehalt von 61 bis 69 Gew.-% und einen Essigsäuregehalt von 2 bis 7 Gew.-% auf. Die OH-Zahlen liegen üblicherweise zwischen 4 und 25. Die mittleren Gewichtsmittel der Molekulargewichte $\overline{M}w$ liegen zwischen 10 000 und 1 000 000, vorzugsweise zwischen 100 000 und 500 000.
Geeignete thermoplastische Polyvinylchloride sind beispielsweise die im Handel befindlichen PVC-Typen.
Geeignete thermoplastische Styrol-Acrylnitril-Copolymerisate sind Mischpolymerisate des Styrols mit vorzugsweise Acrylnitril die z.B. durch Suspensionspolymerisation in Gegenwart von Katalysatoren aus den Monomeren bzw. der Mischung der Monomeren mit \w von 10 000 bis 600 000 erhalten werden ($\overline{M}w$ wird gemessen in DMF bei C = 5 g/l und 20°C). Literatur dazu siehe Beilsteins Handbuch der organischen Chemie, vierte Auflage, Duttes Ergänzungswerk B 1.5, Seiten 1163-1169, Springer Verlag 1964, H. Ohlinger, Polystyrol 1. Teil, Herstellungsverfahren und Eigenschaften der Produkte, Springer Verlag (1955).
Zur Herstellung der Folien (1) kann auf DE-OS 25 17 033 und auf DE-OS 25 31 240 verwiesen werden.
Die Folien (1) können einseitig mattiert oder einseitig strukturiert sein. Dies wird erreicht, indem die Schmelze des thermoplastischen Kunststoffs durch eine Breitschlitzdüse ausgepreßt wird und die Schmelzfahne über eine mattierte bzw. strukturierte Abkühlwalze abgezogen wird.
Die Folien können auch einseitig poliert und einseitig mattiert sein.
Die Dicke der Folien ist, vorzugsweise 0,05 bis 0,8 mm.
Zur Herstellung der erfindungsgemäß geeigneten Farbschicht werden Farben bzw. Lacke, vorzugsweise

Siebdruckfarben auf Basis Polycarbonat, deren Erweichungstemperatur über der der Folie aus thermoplastischem Kunststoff (1) liegt verwendet, die Pigmente und/oder Farbstoffe enthalten.

Geeignete Polycarbonate sind beispielsweise solche auf Basis von linearen Polycarbonaten, die ein Molekulargewicht $\overline{M}_w$ (Gewichtsmittel) von mindestens 10 000, vorzugsweise von 20 000 bis 300 000, haben und die bifunktionelle Carbonatstruktureinheiten der Formel (I) enthalten.

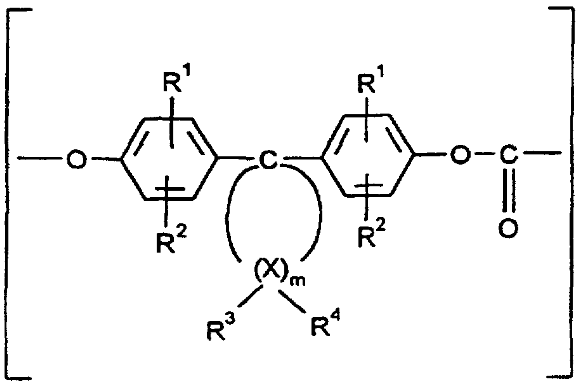

(I),

worin

| | |
|---|---|
| $R^1$ und $R^2$ | unabhängig voneinander Wasserstoff, Halogen, bevorzugt Chlor oder Brom, $C_1$-$C_8$-Alkyl, $C_5$-$C_6$-Aryl, bevorzugt Phenyl, und $C_7$-$C_{12}$-Aralkyl, bevorzugt Phenyl-$C_1$-$C_4$-Alkyl, insbesondere Benzyl, |
| m | eine ganze Zahl von 4 bis 7, bevorzugt 4 oder 5, |
| $R^3$ und $R^4$ | für jedes X individuell wählbar, unabhängig voneinander Wasserstoff oder $C_1$-$C_6$-Alkyl und |
| X | Kohlenstoff bedeuten, |

mit der Maßgabe, daß an mindestens einem Atom X $R^3$ und $R^4$ gleichzeitig Alkyl bedeuten.

Ausgangsprodukte für die Polycarbonate sind Dihydroxydiphenylcycloalkane der Formel (Ia)

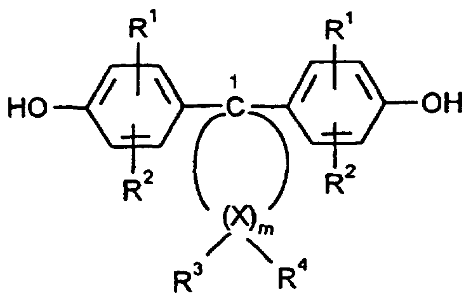

(Ia),

worin
X, $R^1$, $R^2$, $R^3$, $R^4$ und m die für die Formel (I) genannte Bedeutung haben.

Bevorzugt sind an 1-2 Atomen X, insbesondere nur an einem Atom X, $R^3$ und $R^4$ gleichzeitig Alkyl.

Bevorzugte Alkylrest ist Methyl; die X-Atome in $\alpha$-Stellung zu dem Diphenylsubstituierten C-Atomen (C-1) sind bevorzugt nicht dialkylsubstituiert, dagegen ist die Alkyldisubstitution in $\beta$-Stellung zu C-1 bevorzugt.

Bevorzugt sind Dihydroydiphenylcycloalkane mit 5 und 6 Ring-C-Atomen im cycloaliphatischen Rest (m = 4 oder 5 in Formel Ia), beispielsweise die Diphenole der Formel (Ib) bis (Id),

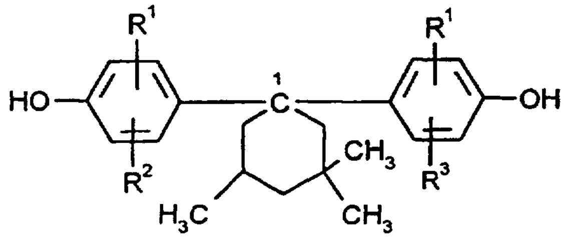

(Ib),

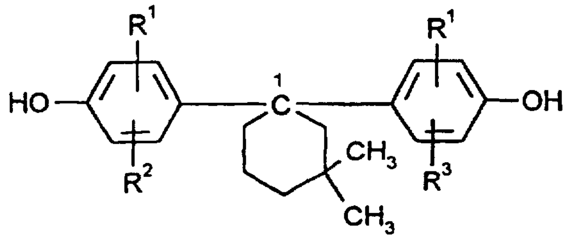

(Ic),

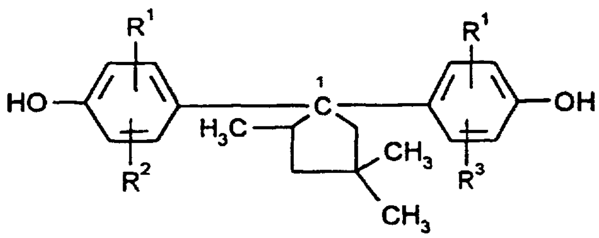

(Id),

wobei das 1,1-Bis-(4-hydroxyphenyl)-3,3,5-trimethylcyclohexan (Formel Ib mit $R^1$ und $R^2$ gleich H) besonders bevorzugt ist. Die Polycarbonate A können gemäß dem Europäischen Patent 395 953 aus Diphenolen der Formel (Ia) hergestellt werden.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

$$HO\text{-}Z\text{-}OH \qquad (Ie)$$

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ie) sind:
Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, $\alpha,\alpha'$-Bis-(hydroxyphenyl)-diisopropylbenzole sowie deren kernalkylierte und kernhalogenierte Verbindungen.

Diese und weitere geeignete Diphenole sind z.B. in den US-A 3 028 365, 2 999 835, 3 148 172, 2 991 273, 3 271 367, 3 062 781, 2 970 131 und 2 999 846, in den DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise:
4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, $\alpha,\alpha$-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, α,α-Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), soll zwischen 100 Mol-% (Ia) zu 0 Mol-% (Ie) und 2 Mol-% (Ia) zu 98 Mol-% (Ie), vorzugsweise zwischen 100 Mol-% (Ia) zu 0 Mol-% (Ie) und 5 Mol-% (Ia) zu 95 Mol-% (Ie) und insbesondere zwischen 100 Mol-% (Ia) zu 0 Mol-% (Ia) zu 90 Mol-% (Ie) und ganz besonders zwischen 100 Mol-% (Ia) zu 0 Mol-% (Ie) und 20 Mol-% (Ia) zu 80 Mol-% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarbonate können in an sich bekannter Weise verzweigt sein. Wenn die Verzweigung gewünscht wird, kann sie in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Einige Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxylphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenyl-isopropyl)phenoxy]-methan und 1,4-Bis-[4',4"-dihydroxytriphenyl)-methyl-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate A dienen monofunktionelle Verbindungen in üblichen Konzentraten. Geeignete Verbindungen sind z.B. Phenol, tert.-Butylphenole oder andere Alkyl-$C_1$-$C_7$-substituierte Phenole. Zur Regelung des Molekulargewichts sind insbesondere kleine Mengen Phenole der Formel (If) geeignet

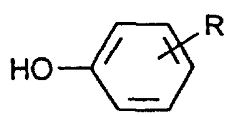

(If),

worin

R einen verzweigten $C_8$- und/oder $C_9$-Alkylrest darstellt.

Bevorzugt ist im Alkylrest R der Anteil an $CH_3$-Protonen zwischen 47 und 89 % und der Anteil der CH- und $CH_2$-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wäßrig alkalischer Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z. B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den

Diphenolen in der wäßrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren Mono- und/oder Bis-chlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, Aceton, Acetonitril sowie Mischungen dieser Lösungsmittel, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wäßrige alkalische Phase dient beispielsweise NaOH-Lösung. Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate haben bevorzugt Molekulargewicht $M_w$ (Gewichtsmittel, ermittelt durch Gelchromatographie nach vorheriger Eichung) von mindestens 2 000, besonders bevorzugt von 20 000 bis 300 000 und insbesondere von 20 000 bis 80 000. Sie können linear oder verzweigt sein, sie sind Homopolycarbonate oder Copolycarbonate auf Basis der Diphenole der Formel (Ia).

Durch den Einbau der Diphenole der Formel (Ia) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (Ia), in denen m 4 oder 5 ist, und ganz besonders für die Polycarbonate auf Basis der Diphenole (Ib), worin $R^1$ und $R^2$ unabhängig voneinander die für die Formel (Ia) genannte Bedeutung haben und besonders bevorzugt Wasserstoff sind.

Die besonders bevorzugten Polycarbonate sind also solche, in denen Struktureinheiten der Formel (I) m = 4 oder 5 ist und ganz besonders solche aus Einheiten der Formel (Ig)

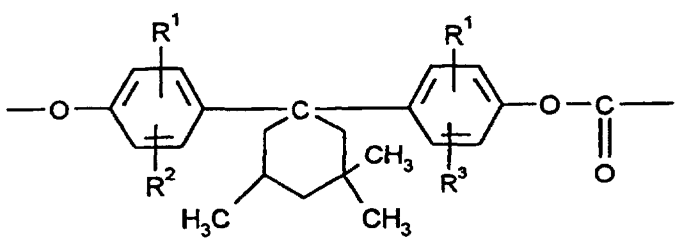

(Ig),

worin $R^1$ und $R^2$ die für Formel (I) genannte Bedeutung haben, besonders bevorzugt aber Wasserstoff, sind.

Diese Polycarbonate auf Basis der Diphenole der Formel (Ib), worin insbesondere $R^1$ und $R^2$ Wasserstoff sind, besitzen zur hohen Wärmeformbeständigkeit außerdem eine gute UV-Stabilität und ein gutes Fließverhalten in der Schmelze, was nicht zu erwarten ist.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 5 Mol-% und insbesondere in Mengen von 100 Mol-% bis 10 Mol-% und ganz besonders von 100 Mol-% bis 20 Mol-%, bezogen auf die Gesamtmenge von 100 Mol-% an Diphenoleinheiten, in Polycarbonaten enthalten.

Neben den beschriebenen Siebdruckfarben auf Basis Polycarbonat, können für die erfindungsgemäß geeigneten Farbschichten auch solche auf Basis von Polyarylaten verwendet werden.

Geeignete Polyarylate sind beispielsweise solche auf Basis von 1,1-Bis-(4-hydroxyphenyl)-alkylcycloalkanen.

Polyarylate können z.B. nach EP-A 443 058 hergestellt werden aus:

a) aromatischen Diphenolen einerseits und

b1) aliphatischen, cycloaliphatischen oder aromatische Dicarbonsäuren und gegebenenfalls

b2) Kohlensäure,

wobei b1) in einer Menge von 0,1 bis 100 Mol-% und gegebenenfalls b2) in einer Menge von 0 bis 99,9 Mol-%, bezogen auf (b1) + b2), vorliegt und a) zu 0,1 bis 100 Mol-% aus Diphenolen der oben angegebenen Formel (Ia) besteht.

Diese Polyarylate, z.B. Polyester und Polyestercarbonate, besitzen gegenüber bekannten Polyestern und Polyestercarbonaten, wie z.B. gegenüber solchen aus Bisphenol-A und aus 1,1-Bis-(4-hydroxyphenyl)-cyclohexan, überraschende Vorteile.

So weisen sie, auch schon bei leinen Anteilen an einkondensierten Bisphenolen der Formel (Ia), überraschend hohe Glastemperaturen $T_g$ auf. Weiterhin zeigen sie, auch schon bei kleinen Anteilen an einkondensierten Bisphenolen der Formel (Ia), ein besonders gutes Entformungsverhalten.

Außerdem zeigen sie eine außergewöhnlich gute Schmelzfließfähigkeit, wenn man die hohe Glastemperatur $T_g$ in Betracht zieht. Zudem sind die erfindungsgemäßen Polyester und Polyestercarbonate besonders kriechstromfest, hydrolysestabil und unempfindlich gegen Spannungsriß, so insbesondere auch in Kontakt mit Benzinen und Ölen. Überraschend ist auch ihre geringe Kristallisationsneigung.

Hier bevorzugte Bisphenole der Formel (Ia) sind:
1,1-Bis-(4-hydroxyphenyl)-3,3-dimethyl-5-methyl-cyclohexan,
1,1-Bis-(4-hydroxyphenyl)-3,3-dimethyl-5,5-dimethyl-cyclohexan,
1,1-Bis-(4-hydroxyphenyl)-3,3-dimethyl-4-methyl-cyclohexan,
1,1-Bis-(4-hydroxyphenyl)-3,3-dimethyl-5-ethyl-cyclohexan,
1,1-Bis-(4-hydroxyphenyl)-3,3-dimethyl-5-methyl-cyclopentan,
1,1-Bis-(3,5-dimethyl-4-hydroxyphenyl)-3,3-dimethyl-5-methyl-cycohexan,
1,1-Bis-(3,5-diphenyl-4-hydroxyphenyl)-3,3-dimethyl-5-methyl-cyclohexan,
1,1-Bis-(3-methyl-4-hydroxyphenyl)-3,3-dimethyl-5-methyl-cyclohexan,
1,1-Bis-(3-phenyl-4-hydroxyphenyl)-3,3-dimethyl-5-methyl-cyclohexan,
1,1-Bis-(3,5-dichlor-4-hydroxyphenyl)-3,3-dimethyl-5-methyl-cyclohexan,
1,1-Bis-(3,5-dibrom-4-hydroxyphenyl)-3,3-dimethyl-5-methyl-cyclohexan.

Aromatische Diphenole, die neben denen der Formel (Ia) für den Aufbau der Polyarylate verwendet werden können, sind beispielsweise:
Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, α,α'-Bis-(hydroxyphenyl)-isopropylbenzole, Pentamethyl-(hydroxy)-indanole, sowie entsprechende kernsubstituierte Verbindungen.

Bevorzugt als Diphenole sind:
Hydrochinon, Bis-(4-hydroxyphenyl), 2,2-Bis-(4-hydroxyphenyl)-propan, Bis-(4-hydroxyphenyl)-sulfid, Bis-(4-hydroxyphenyl)-ether, Bis-(4-hydroxyphenyl)-keton, Bis-(4-hydroxyphenyl)-sulfon, Bis-(4-hydroxyphenyl)-methan, 1,1-Bis-(4-hydroxyphenyl)-cyclohexan, α,α'-Bis-(4-hydroxyphenyl)-p-diisopropylbenzol, 1,1-Bis-(4-hydroxyphenyl)-1-phenyl-ethan, 2,2-Bis-(3-methyl-4-hydroxyphenyl)-propan, 2,2-Bis-(3,5-dichlor-4-hydroxyphenyl)-propan, 2,2-Bis-(3,5-dibrom-4-hydroxyphenyl)-propan, 2,2-Bis-(3,5-dimethyl-4-hydroxyphenyl)-propan, Bis-(3,5-dimethyl-4-hydroxyphenyl)-methan, 2,2-Bis-(3,5-dimethyl-4-hydroxyphenyl)-butan, Bis-(3,5-dimethyl-4-hydroxyphenyl) und 1,1,3,4,6-Pentamethyl-3-(3,5-dimethyl-4-hydroxyphenyl)-indan-5-ol, besonders bevorzugt Bis-(4-hydroxyphenyl), 2,2-Bis-(4-hydroxyphenyl)-propan und 2,2,-Bis-(3,5-dimethyl-4-hydroxyphenyl)-propan, ganz besonders bevorzugt 2,2-Bis-(4-hydroxyphenyl)-propan.

Aliphatische, cycloaliphatische oder aromatische Dicarbonsäuren b1), die für den Aufbau der erfindungsgemäßen Polyester geeignet sind, sind beispielsweise:
Oxalsäure, Malonsäure, Bernsteinsäure, Glutarsäure, Adipinsäure, Pimelinsäure, Suberinsäure, Azelainsäure, Sebazinsäure, Nonandicarbonsäure, Decandicarbonsäure, Dodecandicarbonsäure, Octadecandicarbonsäure, Dimethylmalonsäure, Dimerfettsäure, 1,4-Cyclohexandicarbonsäure, Tetrahydroterephthalsäure, Tetrahydroisophthalsäure, Tetrahydrophthalsäure, 3,6-Endomethylentetrahydrophthalsäure, o-, m-, p-Phenylendiessigsäure, Orthophthalsäure, Terephthalsäure, Isophthalsäure, tert.-Butylisophthalsäure, 3,3'-Diphenyldicarbonsäure, 4,4'-Diphenyldicarbonsäure, 4,4'-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5-dicarbonsäure.

Bevorzugt werden die Polyarylate aus aromatischen Dicarbonsäuren hergestellt. Von den aromatischen Dicarbonsäuren werden besonders bevorzugt die Terephthalsäure und/oder Isophthalsäure eingesetzt. Ganz besonders bevorzugt ist die Terephthalsäure.

Bevorzugt werden Polyarylate, in denen 1 bis 100 Mol-%, bevorzugt 5 bis 100 Mol-% und insbesondere 10 bis 100 Mol-% der Diphenole der Formel (Ia) entsprechen.

Besonders bevorzugt werden Polyestercarbonate, in denen die Dicarbonsäuren (Komponente b1)) in einer Menge von 5 bis 98 Mol-%, bevorzugt von 15 bis 95 Mol-%, besonders bevorzugt von 20 bis 50 Mol-% und 60 bis 95 Mol-% und insbesondere von 25 bis 45 Mol-% und 80 bis 95 Mol-%, bezogen auf die Summe der Dicarbonsäuren b1) und der Kohlensäure b2), enthalten sind.

Aus den Polyarylaten, z.B. Polyestern und Polyestercarbonaten, deren Erweichungstemperatur über der der Folie aus thermoplastischem Kunststoff liegt, können Farben bzw. Lacke, vorzugsweise Siebdruckfarben hergestellt werden, die Pigmente und/oder Farbstoffe enthalten.

Die Farbschicht (2) wird vorzugsweise im Siebdruckverfahren aufgebracht.

Unter Siebdruckverfahren versteht man das Durchdrücken von Farben bzw. Lacken durch ein in einen Rahmen gespanntes Siebgewebe, dessen Maschen partiell je nach Druckvorlage, verschlossen sind. Die verbleibenden Öffnungen im Siebgewebe entsprechen dem Druckbild.

Die Dicke der Farbschicht beträgt 3 bis 50 µm.

Zur Herstellung der erfindungsgemäß geeigneten Polyurethanschichten (3) können sowohl wäßrige, zu transparenten Filmen auftrocknende Dispersionen von vorzugsweise linearen Polyesterpolyurethanen als auch zu transparenten Filmen auftrocknende organische Lösungen von vorzugsweise linearen Polyesterpolyurethanen, die gegebenenfalls ein höherfunktionelles Polyisocyanat als Vernetzer enthalten, verwendet werden. Geeignete Polyurethandispersionen sind beispielsweise solche, auf Basis von linearen Polyesterdiolen, aromatischen oder aliphatischen Diisocyanaten und gegebenenfalls den üblichen Kettenverlängerungsmitteln, die unter Mitverwendung von ionischen Aufbaukomponenten entsprechend US-PS 34 79 310 oder DE-AS 14 95 847 hergestellt worden sind. Sehr gut geeignet sind auch die wäßrigen Dispersionen von Carboxylat- und Sulfonatgruppen aufweisenden, vorzugsweise linearen Polyesterpolyurethanen, wie sie gemäß DE-OS 28 04 609 erhalten werden können. Im Falle der Verwendung von organischen Lösungen von vorzugsweise linearen Polyesterpolyurethanen kommen vorzugsweise Lösungen von nichtionischen linearen Polyesterpolyurethanen in geeigneten Lösungsmitteln in Betracht. Bei diesen Polyurethanen handelt es sich vorzugsweise um Umsetzungsprodukte von (i) aromatischen Diisocyanaten wie 2,4- und/oder 2,6-Diisocyantotoluol, 4,4'-Diisocyanatodiphenylmethan, Hexamethylendiisocyanat, Isophondiisocyanat, oder 1,5-Diisocyanatonaphthalin oder deren Gemischen mit (ii) Polyesterdiolen des Molekulargewichtsbereichs ($\overline{M}w$) 1.000 bis 4.000, insbesondere auf Basis von Adipinsäure und geeigneten Glykolen wie Ethylenglykol, 1,4-Dihydroxybutan, 1,6-Dihydroxyhexan und deren Gemischen und gegebenenfalls (iii) Kettenverlängerungsmitteln, beispielsweise den zuletztgenannten Glykolen, wobei die Reaktionspartner unter Einhaltung eines NCO/OH-Äquivalentverhältnisses von 0,9 : 1 bis 1 : 1,1, vorzugsweise 0,95 : 1 bis 1 : 1 zum Einsatz gelangen, und wobei pro Mol Polyesterdiol gegebenenfalls 0,1 bis 2 Mol Kettenverlängerer bzw. Kettenverlängerergemisch zum Einsatz gelangen. Geeignete Lösungsmittel für derartige Polyesterpolyurethane sind beispielsweise Ethylacetat, Butylacetat, Methylethylketon, Methylisobutylketon oder aus derartigen Lösungsmitteln bestehende Gemische. Die Dispersionen oder Lösungen werden im allgemeinen mit einem Feststoffgehalt von 10-40 Gew.-% verwendet. Oft kann es zweckmäßig sein, den genannten Lösungen untergeordnete Mengen eines höherfunktionellen Polyisocyanats, beispielsweise an Tris-(6-isocyanatohexyl)-biuret einzuverleiben, um die mechanischen Eigenschaften des letztendlich erhaltenen Polyurethanfilms zu verbessern.

Die Polyurethanschicht (3) kann entweder kontinuierlich im Rollcoater- oder Rakelverfahren auf die Folie aufgebracht werden, oder aber im Siebdruckverfahren nach der Farbschicht. Die Menge der Polyurethan-Dispersion bzw. Lösung wird im allgemeinen so bemessen, daß Trockenfilmstärken von 2 - 80 µm, vorzugsweise 15 - 30 µm resultieren.

Die Polyurethanschichten (3) stellen bei Raumtemperatur völlig klebfreie thermoplastische Schichten dar.

Die thermoplastische Kunststoffschicht (4) ist vorzugsweise aus thermoplastischem Polymethylmethacrylat, thermoplastischem Acrylnitril-Butadien-Styrol-Copolymerisat, thermoplastischem Polystyrol, thermoplastischem Polycarbonat, thermoplastischem Styrol-Acrylnitril-Copolymerisat oder thermoplastischem Celluloseester. (Die drei letztgenannten thermoplastischen Kunststoffe sind auch für die Folie (1) geeignet).

Bei der thermoplastischen Kunststoffschicht (4) kann es sich entweder um eine einlagige Schicht dieser Kunststoffe handeln, ober um eine mehrlagige Kunststoffschicht aus Einzellagen verschiedener Kunststoffe mit einer Dicke von jeweils 0,050 bis 5 mm.

Für die Schicht (4) geeignete thermoplastische Polymethylmethacrylate sind beispielsweise die im Handel befindlichen Plexiglas-Typen.

Thermoplastische Acrylnitril-Butadien-Styrol-Copolymerisate sind insbesondere Mischungen aus

a) 50 bis 70 Gew.-% eines oder mehrerer Pfropfprodukte und

b) 95 bis 30 Gew.-% eines oder mehrerer thermoplastischer Harze.

Pfropfprodukte (a) sind bevorzugt Polymerisate, die durch Polymerisation von Pfropfmonomeren in Anwesenheit eines Kautschuks als Pfropfbasis erhalten werden. Der Kautschukanteil ist bevorzugt 5 bis 80 Gew.-%, er

hängt auch vom Polymerisationsverfahren ab.

Als Pfropfbasis kommt insbesondere Polybutadien, Naturkautschuk, Butadien/Acrylnitril-Copolymerisate und Butadien/Styrol-Co- und Blockpolymerisate in Betracht. Verwendbar sind auch Acrylester-Vinylether-Polymerisate sowie EPDM-Terpolymerisate Pfropfmonomere sind hauptsächlich Styrol Gemische aus Styrol und Acrylnitril bevorzugt im Gewichtsverhältnis 90:10 bis 50:50. Gemische aus Styrol und Methyl(meth)acrylat, bevorzugt im Gewichtsverhältnis 5:95 bis 95:5 sowie Styrol/Acrylnitril/Methyl(meth)acrylat-Gemische.

Die Herstellung solcher Pfropfprodukte ist an sich bekannt. Man kann die Pfropfmonomeren in Gegenwart eines Kautschuklatex in Emulsion polymerisieren. Die Pfropfreaktion wird dann mit einem radikalischen Initiator gestartet. Ist der Kautschuk anvernetzt und werden bei der Pfropfreaktion bestimmte Mengenverhältnisse von Pfropfmonomeren und Pfropfgrundlagen eingehalten, so ist die Größe der Kautschukteilchen im Latex bestimmend für die Teilchengröße des resultierenden Pfropfpolymerisats. Die Pfropfhülle aus chemisch an die Kautschukteilchen gebundenen Ketten des Polymerisats der Pfropfmonomeren ist im Verhältnis dünn und ändert die Größe des Kautschukteilchens nicht wesentlich. Als Größe wird hier der $d_{50}$-Wert verstanden, d.h. der Durchmessr oberhalb dessen und unterhalb dessen jeweils 50 % der Durchmesser der Teilchen liegen. Die Pfropfreaktion ist unvollständig, so daß ihr Produkt als Pfropfprodukt bezeichnet wird. Neben dem eigentlichen Pfropfpolymerisat enthält es auch nichtgepfropfte Copolymere der Pfropfmonomeren.

Man kann die Pfropfpolymerisate auch durch Masse/Lösung- oder Masse/Suspensionspolymerisation, vorzugsweise aus Monomer löslichem Kautschuk herstellen. Die Größe der Pfropfkautschukteilchen wird dann in der Phaseninversionsstufe festgelegt und kann mechanisch (durch Rühren) und durch chemische Beeinflussung des Phasengleichgewichts (Zusatz von Dispergatoren) beeinflußt werden. Im allgemeinen werden bei Masse/Lösungs-Pfropfprozessen Teilchen von 1 µm Durchmeser oder größer erhalten. Der Kautschukgehalt des Pfropfproduktes ist auf maximal 25 Gew.-% beschränkt.

Man kann erfindungsgemäß Produkte verwenden, deren Teilchen eine Größe von 0,05 bis 20 µm haben und soche, in denen ein erheblicher Teil der Pfropfmonomeren im Innern der Kautschukteilchen als Homo- oder Copolymerisat inkludiert ist. Bevorzugte Teilchengrößen sind 0,05 bis 1,2 µm, insbesondere 0,05 bis 0,6 µm. Es ist auch möglich, mehrere verschiedene Pfropfprodukte nebeneinander einzusetzen z.B. zwei Pfropfprodukte, die sich durch den Pfropfgrad (oder durch die Pfropfdichte), die Teilchengröße oder durch beides gleichzeitig unterscheiden. Besonders geeignet ist beispielsweise ein Gemisch aus einem Pfropfprodukt mit Teilchen einer Größe $d_{50}$ von 0,35 bis 10 µm und einem Pfropfprodukt mit Teilchen einer Größe $d_{50}$ von 0,05 bis 0,32 µm (so hergestellte ABS-Polymerisate werden auch als Bimodalsysteme bezeichnet).

Bevorzugt enthalten die Pfropfprodukte 35 bis 80 Gew.-%, insbesondere 40 bis 70 Gew.-%, Kautschuk und besitzen Teilchgengrößen $d_{50}$ von 0,1 bis 0,5 µm. Sie werden in einer solchen Menge eingesetzt, daß das fertige ABS-Polymerisat 5 bis 25 Gew.-%, bevorzugt 5 bis 20 Gew.-% Kautschuk enthält.

Das den zweiten Bestandteil des ABS-Polymerisats bildende thermoplastische Harz (b) stellt die durchgehende Matrix dar und ist ein Polymerisat oder Copolymerisat von Styrol, α-Methylstyrol/Acrylnitril/Methyl(meth)acrylat oder Maleinsäureanhydrid. Bevorzugt sind Polystyrol, Styrol-Acrylnitril-Copolymerisate mit einem Acrylnitrilgehalt von 20 bis 35 Gew.-% sowie α-Methylstyrol-Acrylnitril-Copolymerisate mit einem Acrylnitrilgehalt von 20 bis 31 Gew.-%. Das Gewichtsmittel des Molekulargewichtes dieser Harze ist 50 000 bis 550 000; die molekulare Uneinheitlichkeit U.

$$\left(\frac{M}{M} - 1 = U\right)$$

ist 1,0 bis 3,5

Verwendet man ein einzelnes Pfropfprodukt, so ist es vorteilhaft, wenn die quantitative Zusammensetzung der Pfropfmonomeren und die des Harzes ähnlich oder gleich sind. Verwendet man ein Gemisch von zwei Pfropfprodukten verschiedener Teilchengrößen, dann ist es vorteilhaft, wenn die quantitative Zusammensetzung der Pfropfmonomeren des Pfropfproduktes mit den gröberen Teilchen von der Zusammensetzung des Harzes verschieden ist. α-Methylstyrol in Kombination mit Acrylnitril kann nicht gepfropft werden, sondern ist nur im Harz zu verwenden.

Die thermoplastischen Harze, z.B. Styrol/Acrylnitril oder α-Methylstyrol/Acrylnitril-Copolymerisate können nach bekannten Verfahren hergestellt werden, z.B. durch Massepolymerisation, Lösungspolymerisation, Suspensionspolymerisation und Emulsionspolymerisation.

Pfropfprodukt und thermoplastisches Harz werden häufig getrennt hergestellt, beide meist durch Emulsionspolymerisation. Fallen die Komponenten in Latexform an, so können die Latices gemischt und gemeinsam ausgefällt werden.

Zur Herstellung der thermoplastischen Kunststoffschicht (4) geeignete thermoplastische Polystyrole sind Homopolymerisate des Styrols oder Mischpolymerisate des Styrols mit vorzugsweise Acrylnitril und/oder Butadien, und/ oder Maleinsäureester, die z.B. durch Suspensionspolymerisation in Gegenwart von Katalysatoren aus den Monomeren bzw. der Mischung der Monomeren mit $\overline{M}w$ von 10 000 bis 600 000 erhalten werden ($\overline{M}w$ wird gemessen DMF bei c = 5 g/l und 20°C). (Literatur dazu siehe: Beilsteins Handbuch der Organischen Chemie, vierte Auflage, Drittes Ergänzungswerk, Bd. 5, Seiten 1163-1169, Springer Verlag 1964, H. Ohlinger, Polystyrol, 1. Teil, Herstellungsverfahren und Eigenschaften der Produkte, Springer Verlag 1955).

Die thermoplastische Kunststoffschicht (4) kann durch Hinterspritzen der Schichten 1 + 2 bzw. 1 + 2 + 3 nach bekannten Verfahren (vgl. DE-OS 27 55 088) aufgebracht werden.

Die Dicke der thermoplastischen Kunststoffschicht (4) ist vorzugsweise 0,1 bis 19 mm.

Ein weiterer Gegenstand der Erfindung ist ein Verfahren zur Herstellung der Schichtstoffe aus den Schichten 1 + 2 + 4 und gegebenenfalls 3, das dadurch gekennzeichnet ist, daß man Folien aus thermoplastischen Kunststoffen mit einer Farbschicht und gegebenenfalls mit einer Polyurethanschicht im Siebdruck beschichtet und schließlich mit einer thermoplastischen Kunststoffschicht in bekannter Weise hinterspritzt oder laminiert.

Verbundfolien mit Polyurethanverklebung sind bekannt (DE-OS 25 17 032 und DE-AS 30 10 143).

Das Hinterspritzen von thermoplastischen Kunststoff-Folien mit thermoplastischen Kunststoffen ist ebenfalls bekannt (DE-OS 27 55 088), ebenfalls das Hinterspritzen von thermoplastischen Folien mit einer Farbzwischenschicht (DE-OS 35 28 812).

Aus der DE-OS 15 94 164 sind Schichtstoffe aus Polycarbonaten und Glas bekannt, die Polyurethanzwischenschichten enthalten. Diese Schichtstoffe können beispielsweise als Windschutzscheiben für Kraftfahrzeuge verwendet werden. Einfärbungen dieser Schichtstoffe sind in der DE-OS 15 94 164 nicht angesprochen.

Ein Ziel der Erfindung ist es, die Herstellung von Druckbilder enthaltenden Schichtstoffen zu vereinfachen und die Schichtstoffe selbst zu verbessern, denn:

1. Aus der Spritzgußmaschine werden einbaufertige, d.h. mit endgültigem Dekor versehene Teile entnommen.

2. Der Dekordruck ist wisch- und abriebgeschützt, da er zwischen Frontfolie und Trägerschicht liegt.

3. Der Dekordruck ist aufgrund der Farb-/bzw. Lackbasis thermisch höher belastbar als die Trägerfolie und wird bei der Weiterverarbeitung (Hinterspritzen) nicht geschädigt.

4. Die Schichtstoffe sind besonders einfach herstellbar.

5. Durch entsprechende Auswahl der Bestandteile können die Eigenschaften in weiten Grenzen variiert werden.

Die erfindungsgemäßen Schichtstoffe können beispielsweise für Blenden in Kraftfahrzeugen für Heizung und Lüftung, Lichtschalter sowie für Haushalts-, Phono und TV-Geräte verwendet werden.

**<u>Beispiel 1</u>**

Auf eine 200 µm dicke, einseitig strukturierte, einseitig matte Folie aus thermoplastischen Diphenol-A-Homopolycarbonat ($\eta_{rel}$ = 1,31, gemessen in $CH_2Cl_2$ bei 25°C und einer Konzentration von 0,5 g/100 ml) wird auf der matten Seite das Dekor mit einer Farbe auf Basis Copolycarbonat mit einer $\eta_{rel}$ (gemessen in $CH_2Cl_2$ bei 25°C und einer Konz. von 0,5 g/100 ml) hergestellt aus 30 Mol-% Bisphenol-A und 70 Mol-% 1,1-Bis-(4-hydroxyphenyl)-3,3,5-trimethylcyclohexan im Siebdruckverfahren aufgedruckt.

Die bedruckte Folie wird gemäß DE-OS 38 40 542 verformt, entsprechend den Konturen des Fertigteiles. Die bedruckte und verformte Folie wird entsprechend der Form des Fertigteils ausgestanzt und so in die geöffnete Spritzgießform für den Trägerwerkstoff eingelegt, daß die strukturierte Seite der Polycarbonatfolie dem Anspritzpunkt des thermoplastischen Kunststoffes gegenüberliegt.

Die Folie kann im Werkzeug durch elektrostatische Aufladung oder durch Vakuum fixiert werden. Nach Schließen des Werkzeuges wird Bisphenol A-Polycarbonat mit einer $\eta_{rel}$ von 1,3 (gemessen in $CH_2Cl_2$ bei 20°C und einer Konzentration von 0,5 g/100 Cl) eingespritzt. Die Gesamtdicke des Schichtstoffes beträgt 6 mm.

**<u>Beispiel 2</u>**

Beispiel 1 wird wiederholt. Nach dem Dekordruck wird eine wäßrige Dispersion eines Polyurethans auf Basis von Polybutylenadipinat mit einem Molekulargewicht $\overline{M}w$ von 4000 und von einer Mischung aus Hexamethylendiisocyanat und Isophorondiisocyanat durch Siebdruck aufgebracht. Die Folie wird gemäß Beispiel 1 verformt gestanzt und in das Spritzgußwerkzeug eingelegt.

Nach Schließen des Werkzeuges wird in an sich bekannter Weise Acrylnitril-Butadien-Styrol-Mischpolymerisat mit einer $\eta_{rel}$ von 1,4, das durch Copolymerisation von 50 Gew.-% Acrylnitril, 20 Gew.-% Butadien und 30 Gew.-% Styrol gemäß DAS 28 27 594 erhalten wurde eingespritzt.

**Beispiel 3**

Beispiel 2 wird wiederholt, wobei als Polycarbonatfolie eine einseitig hochglänzend polierte, einseitig matte Polycarbonatfolie aus dem Bisphenol-A-Homopolycarbonat des Beispiels 1 mit einer Dicke von 200 µm eingesetzt wird.
Nach dem Aufdrucken der Farb-Dekorschicht wird die Polyurethanschicht durch Siebdruck aufgebracht und dann mit thermoplastischem Polycarbonat ($\overline{M}$w 40 000) hinterspritzt.
Die Gesamtdicke des Schichtstoffes beträgt 8 mm.

**Beispiel 4**

Beispiel 1 wird wiederholt, wobei als Farbe eine solche auf Basis Polyarylat, hergestellt aus 1,1-Bis-(4-hydroxyphenyl)-3,3,5-trimethylcyclohexan und Isophthalsäurechlorid im Molverhältnis 1 : 1, verwendet wird. Die Harzbasis der Siebdruckfarbe hat ein $\eta_{rel}$ von 1,24 (gemessen in $CH_2Cl_2$ bei 25°C, c = 5 g/l Lösung) und eine $T_g$ von 256°C (gemessen mit DTA).

## Patentansprüche

**1.** Schichtstoffe einer Dicke bis 20 mm bestehend aus

1. einer 0,02 mm bis 0,8 mm dicken Folie aus thermoplastischem Kunststoff,

2. einer Farbschicht mit einer Dicke von 3 bis 50 µm, deren Erweichungstemperatur über der der thermoplastischen Kunststoff-Folie (1) liegt,

3. gegebenenfalls einer bei Raumtemperatur klebfreien Polyurethanschicht und

4. einer thermoplastischen Kunststoffschicht einer Dicke von 0,1 mm bis 19 mm, die ihrerseits aus einer oder aus mehreren Kunststoffschichten besteht.

**2.** Schichtstoffe gemäß Anspruch 1 mit einer Dicke von 0,2 mm bis 20 mm.

**3.** Verfahren zur Herstellung der Schichtstoffe gemäß den Ansprüchen 1 oder 2, **dadurch gekennzeichnet, dass** man Folien aus thermoplastischen Kunststoffen mit einer Farbschicht und gegebenenfalls mit einer Polyurethanschicht durch Siebdruck beschichtet und schließlich mit einer oder mehreren thermoplastischen Kunststoffschichten in bekannter Weise hinterspritzt.

**4.** Verfahren gemäß Anspruch 3, worin die Basis der Farbschicht ein Polycarbonat ist.

**5.** Verfahren gemäß Anspruch 3, worin die Basis der Farbschicht ein Polyarylat ist.

## Claims

**1.** Laminates of a thickness of up to 20 mm consisting of

1. a film made of thermoplastic of a thickness of 0.02 mm to 0.8 mm,

2. a coloured layer of a thickness of 3 to 50µm, the softening temperature of which is above that of the film made of thermoplastic (1),

3. optionally a polyurethane layer which is tack-free at room temperature and

4. a layer of thermoplastic of a thickness of 0.1 mm to 19 mm, which in turn consists of one or more layers of

plastic.

**2.** Laminates according to claim 1 of a thickness of 0.2 mm to 20 mm.

**3.** Process for the production of the laminates according to claims 1 or 2, **characterised in that** films made of thermoplastics are coated by screen printing with a coloured layer and optionally with a polyurethane layer and finally injection-backed in a known manner with one or more layers of thermoplastic.

**4.** Process according to claim 3, in which the coloured layer is based on a polycarbonate.

**5.** Process according to claim 3, in which the coloured layer is based on a polyarylate.

**Revendications**

**1.** Stratifiés, à une épaisseur allant jusqu'à 20 mm, et consistant en

1. une feuille de résine synthétique thermoplastique d'une épaisseur de 0,02 mm à 0,8 mm,
2. une couche colorée, d'une épaisseur allant de 3 à 50 µm, dont la température de ramollissement est supérieure à celle de la feuille de résine synthétique thermoplastique (1),
3. le cas échéant une couche de polyuréthanne non collante à température ambiante et,
4. une couche de résine synthétique thermoplastique d'une épaisseur de 0,1 mm à 19 mm, qui peut elle-même consister en une ou plusieurs couches de résines synthétiques.

**2.** Stratifiés selon la revendication 1, à une épaisseur de 0,2 mm à 20 mm.

**3.** Procédé pour la fabrication des stratifiés selon les revendications 1 ou 2, **caractérisé en ce que**, sur des feuilles de résines synthétiques thermoplastiques, on applique par impression sérigraphique une couche colorée et le cas échéant une couche de polyuréthanne, et finalement on applique par projection à l'arrière, de manière connue, une ou plusieurs couches de résine synthétique thermoplastique.

**4.** Procédé selon la revendication 3, dans lequel la base de la couche colorée est un polycarbonate.

**5.** Procédé selon la revendication 3, dans lequel la base de la couche colorée est un polyarylate.